# FASCICULE DE BREVET EUROPEEN

(11) **EP 3 253 495 B1**
(45) Date de publication et mention de la délivrance du brevet: **09.11.2022**
(21) Numéro de dépôt: 16707863.3
(22) Date de dépôt: 03.02.2016
(51) Int. Cl.: B05B 9/04, A01M 7/00, B05B 12/14, F04B 41/02

(54) **DISPOSITIF DE DISTRIBUTION POUR UN PULVÉRISATEUR AGRICOLE**
ABGABEVORRICHTUNG UND FELDSPRITZE
DISPENSING DEVICE FOR AGRICULTURAL SPRAYER

(30) Priorité: 03.02.2015 FR 1550836
(43) Date de publication de la demande: 13.12.2017
(73) Titulaire: Exel Industries, 75009 Paris (FR)
(72) Inventeur: CHARCOSSET, Philippe, 69860 Monsol (FR); CARRA, Yves, 69210 Saint Bel (FR)
(74) Mandataire: Argyma
(86) Numéro de dépôt international: PCT/FR2016/050224
(87) Numéro de publication internationale: WO 2016/124856

(56) Documents cités:
- EP-A1- 1 790 891
- FR-A1- 2 515 989
- US-A- 4 047 587

## Description

L'invention concerne un dispositif de distribution pour un pulvérisateur agricole, le pulvérisateur étant associé à une pluralité de sources de produit à pulvériser et à une pluralité d'organes de pulvérisation.

On connaît un type de système de pulvérisation qui comporte un pulvérisateur agricole associé à une pluralité de sources de produits à pulvériser, généralement des produits sous formes liquide.

Ce système de pulvérisation est équipé d'une pluralité d'organes de pulvérisation qui sont chacun adaptés pour pulvériser au moins un produit provenant des différentes sources.

Aussi, le système comporte des vannes multi-voies qui sont actionnées par l'opérateur pour relier et associer une des sources de produit sur un des organes de pulvérisation, selon la position des vannes choisie.

Avec ce type de système de pulvérisation, il existe un risque de relier par inadvertance une des sources de produit avec un organe de pulvérisation non adapté à ce produit.

Le document EP1790891 décrit un appareil de distribution pour distribuer un flux de fluide, comprenant des moyens de soupape de distribution agencés pour régler ledit flux de fluide vers ledit appareil et des moyens de came pour déplacer un élément sensible desdits moyens de soupape de distribution.

Pour éviter notamment ce genre de mauvaises manipulations, la présente invention propose un dispositif de distribution pour pulvérisateur qui vise à relier de façon sûre au moins une des sources de produit sur l'organe de pulvérisation adapté.

Dans ce but, la présente invention se rapporte à un dispositif de distribution pour un pulvérisateur agricole, le pulvérisateur étant associé à une pluralité de sources de produit et à une pluralité d'organes de pulvérisation, dispositif caractérisé en ce qu'il comporte :
- un collecteur d'alimentation présentant au moins deux entrées et au moins une sortie, chaque entrée étant adaptée pour être reliée sur une desdites sources de produit et chaque entrée coopérant avec une première soupape de fermeture,
- un collecteur de distribution présentant au moins une entrée et au moins deux sorties, chaque sortie étant adaptée pour être reliée sur un desdits organes de pulvérisation et chaque sortie coopérant avec une deuxième soupape de fermeture,
- un conduit de distribution qui relie la sortie du collecteur d'alimentation sur l'entrée du collecteur de distribution, pour permettre aux produits de passer du collecteur d'alimentation au collecteur de distribution,
- un mécanisme de commande qui comporte au moins un arbre à cames portant une pluralité de cames, chaque came agissant sur l'ouverture et la fermeture d'une desdites premières et deuxièmes soupapes, l'arbre à cames étant monté tournant entre plusieurs positions angulaires dans chacune desquelles les premières et deuxièmes soupapes permettent l'alimentation d'un desdits organes de pulvérisation par au moins une desdites sources de produits et
- un moyen d'actionnement de l'arbre à cames.

Ainsi, l'invention permet d'éviter tout risque de mauvaise manipulation en liant mécaniquement chaque source de produit à un organe de pulvérisation.

Selon une autre caractéristique, le mécanisme de commande comporte un premier arbre à cames qui porte au moins deux cames agissant chacune sur une desdites premières et deuxièmes soupapes associées du collecteur d'alimentation, et un second arbre à cames qui porte au moins deux cames agissant chacune sur une desdites premières et deuxièmes soupapes associées du collecteur de distribution, le premier arbre étant lié en rotation sur le second arbre par un moyen d'accouplement débrayable.

Cette caractéristique permet d'entraîner en rotation le premier arbre à cames indépendamment du second arbre à cames, ce qui permet notamment de changer l'attribution initiale des sources de produits aux organes de pulvérisation.

De plus, le conduit de distribution est équipé d'une pompe de circulation conçue pour permettre l'écoulement des produits depuis lesdites sources jusqu'auxdits organes de pulvérisation.

Selon une variante de réalisation, le collecteur d'alimentation et le collecteur de distribution font partie intégrante de la pompe de circulation.

Aussi, le dispositif comporte un conduit de sécurité qui relie le collecteur d'alimentation sur le collecteur de distribution et qui est équipé d'une soupape de sécurité.

Enfin, le dispositif comporte au moins un moyen de régulation du débit d'écoulement du produit.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique qui illustre un dispositif de distribution pour pulvérisateur agricole comportant un arbre à cames de commande des soupapes, selon un premier mode de réalisation de l'invention ;
- la figure 2 est une vue schématique qui illustre le dispositif de la figure 1 comportant deux arbre à cames de commande des soupapes, selon un second mode de réalisation de l'invention.

Pour les différents modes de réalisation, les mêmes références pourront être utilisées pour des éléments identiques ou assurant la même fonction, par souci de simplification de la description.

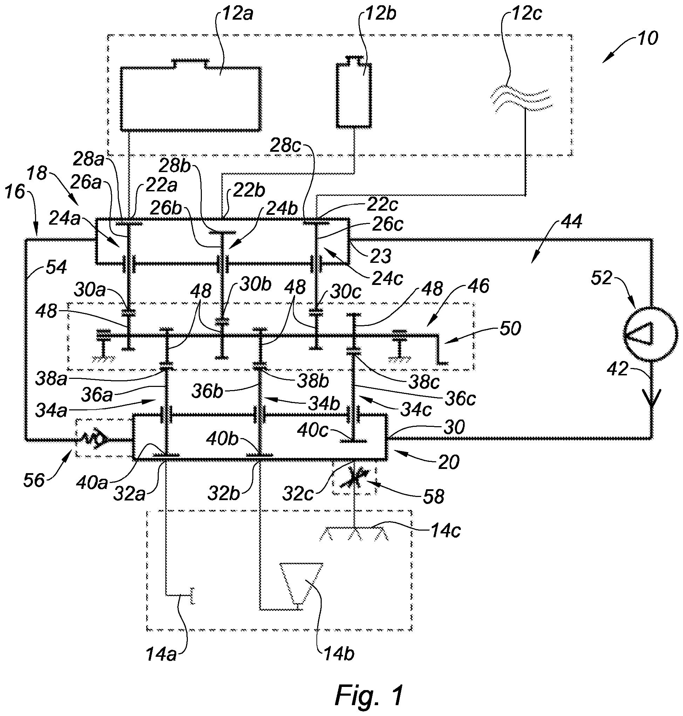

On a représenté à la figure 1 un pulvérisateur 10 agricole qui comporte trois sources de produit 12a, 12b, 12c liquide de nature différente et trois organes de pulvérisation 14a, 14b, 14c chacun adaptés pour pulvériser au moins un des produits 12a, 12b, 12c.

Le pulvérisateur 10 est équipé d'un dispositif de distribution 16 qui permet de sélectionner une combinaison adaptée d'une source de produit avec un organe de pulvérisation 14a, 14b, 14c associé, sachant que les sources de produit 12a, 12b, 12c ne sont pas toutes compatibles avec chaque organe de pulvérisation 14a, 14b, 14c.

A cet effet, le dispositif de distribution 16 comporte un collecteur d'alimentation 18 qui est relié sur les sources de produit 12a, 12b, 12c, et un collecteur de distribution 20 qui est relié sur les organes de pulvérisation 14a, 14b, 14c.

Le collecteur d'alimentation 18 présente trois entrées 22a, 22b, 22c et une sortie 23, les entrées 22a, 22b, 22c étant reliées sur les sources de produit 12a, 12b, 12c respectivement.

De plus, chaque entrée 22a, 22b, 22c du collecteur d'alimentation 18 coopère avec une soupape 24a, 24b, 24c de fermeture respectivement.

Chaque soupape 24a, 24b, 24c comporte une tige 26a, 26b, 26c axiale d'actionnement qui est munie d'une tête 28a, 28b, 28c à une première extrémité, et d'un pied 30a, 30b, 30c à une seconde extrémité opposée, respectivement.

La tige 26a, 26b, 26c de chaque soupape 24a, 24b, 24c est montée coulissante axialement sur le corps du collecteur d'alimentation 18, de sorte que chaque soupape 24a, 24b, 24c est montée mobile entre une position ouverte dans laquelle la tête 28a, 28b, 28c permet le passage du produit 12a, 12b, 12c de la source associée à travers l'entrée 22a, 22b, 22c associée du collecteur d'alimentation 18, et une position fermée dans laquelle la tête 28a, 28b, 28c obstrue l'entrée 22a, 22b, 22c.

De même, le collecteur de distribution 20 présente une entrée 30 et trois sorties 32a, 32b, 32c, les sorties étant reliées sur les organes de pulvérisation 14a, 14b, 14c respectivement.

De plus, chaque sortie 32a, 32b, 32c du collecteur de distribution 20 coopère avec une soupape 34a, 34b, 34c de fermeture respectivement.

Chaque soupape 34a, 34b, 34c comporte une tige 36a, 36b, 36c axiale d'actionnement qui est munie d'une tête 38a, 38b, 38c à une première extrémité, et d'un pied 40a, 40b, 40c à une seconde extrémité opposée, respectivement.

La tige 36a, 36b, 36c de chaque soupape 34a, 34b, 34c est montée coulissante axialement sur le corps du collecteur de distribution 20, de sorte que chaque soupape 34a, 34b, 34c est montée mobile entre une position ouverte dans laquelle la tête 38a, 38b, 38c permet le passage du produit à travers la sorite 32a, 32b, 32c du collecteur de distribution 20, et une position fermée dans laquelle la tête 38a, 38b, 38c obstrue la sortie 32a, 32b, 32c.

De façon complémentaire, un conduit de distribution 42 relie la sortie 23 du collecteur d'alimentation 18 sur l'entrée 30 du collecteur de distribution 20, pour permettre aux produits de passer de l'un à l'autre.

Aussi, le dispositif de distribution 16 est équipé d'un mécanisme de commande 44 qui est conçu pour entraîner en déplacement les différentes soupapes pour combiner et mettre en relation une source de produit avec un organe de pulvérisation adapté.

Selon un premier mode de réalisation de l'invention, représenté à la figure 1, le mécanisme de commande 44 comporte un arbre à cames 46 qui porte six cames 48.

Chaque came 48 coopère avec le pied d'une soupape 24a, 24b, 24c, 34a, 34b, 34c associée, pour entraîner la soupape associée dans sa position ouverte ou fermée.

De plus, l'arbre à cames 46 est monté tournant entre au moins trois positions angulaires dans chacune desquelles les soupapes permettent l'alimentation d'un des organes de pulvérisation 14a, 14b, 14c par une des sources de produits 12a, 12b, 12c.

A cet effet, les trois cames 48 qui sont associées aux trois soupapes 24a, 24b, 24c du collecteur d'alimentation 18 sont agencées sur l'arbre à cames 46 de façon décalées angulairement d'au moins un tiers de tour, soit 120 degrés d'angle, suivant les trois positions angulaires de l'arbre à cames 46.

De même, les trois cames 48 qui sont associées aux trois soupapes 34a, 34b, 34c du collecteur de distribution 20 sont agencées sur l'arbre à cames 46 de façon décalées angulairement d'au moins un tiers de tour, soit 120 degrés d'angle, suivant les trois positions angulaires de l'arbre à cames 46.

Plus particulièrement, les cames 48 sont agencées de sorte que pour chaque position angulaire de l'arbre à cames 46, une des trois soupapes 24a, 24b, 24c du collecteur d'alimentation 18 est ouverte et une des trois soupapes 34a, 34b, 34c du collecteur de distribution 20 est ouverte, pour permettre le passage du produit depuis une des sources de produit 12a, 12b, 12c, jusqu'à un des organes de pulvérisation 14a, 14b, 14c associé.

En outre, le dispositif de distribution comporte un moyen d'actionnement 50 permettant l'entraînement en rotation de l'arbre à cames 46, le moyen d'actionnement 50 est selon l'exemple décrit ici une manivelle qui est reliée sur l'arbre à cames 46 pour entraîner l'arbre à cames 46 manuellement entre ses trois positions.

A titre non limitatif, le moyen d'actionnement 50 peut aussi être un moyen motorisé, par exemple un moteur électrique qui entraîne l'arbre à cames 46 en rotation.

Comme on peut le voir à la figure 1, l'écoulement des produits 12a, 12b, 12c depuis leur source, jusqu'aux organes de pulvérisation 14a, 14b, 14c, est assuré par une pompe de circulation 52 qui est montée sur le conduit de distribution 42.

Selon une variante de réalisation de l'invention non représentée, le collecteur d'alimentation 18 et le collecteur de distribution 20 font partie intégrante de la pompe de circulation 52.

Selon un autre aspect de l'invention, le dispositif de distribution 16 comporte un conduit de sécurité 54 qui relie le collecteur d'alimentation 18 sur le collecteur de distribution 20 et qui est équipé d'une soupape de sécurité 56, pour limiter la pression et protéger le dispositif.

De plus, un moyen de régulation 58 du débit d'écoulement du produit est associé à un organe de pulvérisation 14c.

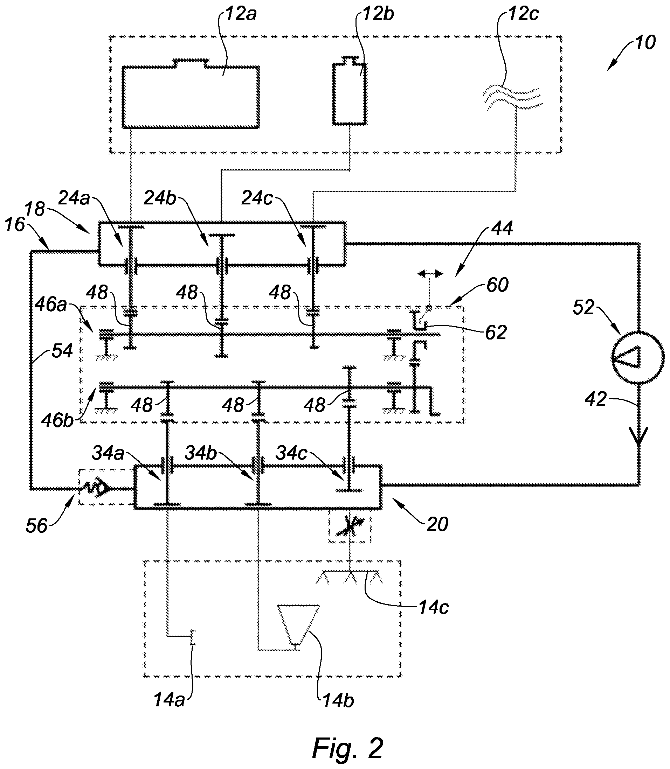

Selon un second mode de réalisation de l'invention, représenté à la figure 2, le mécanisme de commande 44 comporte un premier arbre à cames 46a qui porte trois cames 48 coopérant chacune avec une des trois soupapes 24a, 24b, 24c du collecteur d'alimentation 18, et un second arbre à cames 46b qui porte trois cames 48 coopérant chacune avec une des trois soupapes 34a, 34b, 34c du collecteur de distribution 20.

Le second mode de réalisation de l'invention étant similaire au premier mode de réalisation, il ne sera décrit que succinctement pour ne pas alourdir inutilement la description.

Selon ce second mode de réalisation, chaque arbre à cames 46a, 46b est monté tournant entre au moins trois positions angulaires dans chacune desquelles les soupapes permettent l'alimentation d'un des organes de pulvérisation 14a, 14b, 14c par une des sources de produits 12a, 12b, 12c.

De plus, le premier arbre à cames 46a est lié en rotation sur le second arbre à cames 46b par un moyen d'accouplement 60 débrayable.

Le moyen d'accouplement 60 est par exemple constitué d'un pignon 62 monté libre en translation sur le premier arbre à cames 46a entre une position embrayée d'entraînement du second arbre à cames 46b et une position débrayée.

Cette caractéristique permet, lorsque le moyen d'accouplement 60 est débrayé, d'entraîner en rotation le premier arbre à cames 46a indépendamment du second arbre à cames 46b, ce qui permet notamment de changer l'attribution initiale des sources de produits 12a, 12b, 12c aux organes de pulvérisation 14a, 14b, 14c.

La présente description de l'invention est donnée à titre d'exemple non limitatif.

De même, des inversions mécaniques simples sont couvertes par l'invention, ainsi que le nombre de sources de produits et d'organes de pulvérisation.

On comprendra que les soupapes peuvent être remplacées par tout moyen équivalent permettant d'ouvrir ou de fermer un orifice, comme une vanne ou un clapet.

## Revendications

1. Dispositif de distribution (16) pour un pulvérisateur (10) agricole, le pulvérisateur (10) étant associé à une pluralité de sources de produit (12a, 12b, 12c) et à une pluralité d'organes de pulvérisation (14a, 14b, 14c), dispositif **caractérisé en ce qu'**il comporte :
- un collecteur d'alimentation (18) présentant au moins deux entrées (22a, 22b, 22c) et au moins une sortie (23), chaque entrée (22a, 22b, 22c) étant adaptée pour être reliée sur une desdites sources de produit (12a, 12b, 12c) et chaque entrée (22a, 22b, 22c) coopérant avec une première soupape (24a, 24b, 24c) de fermeture,
- un collecteur de distribution (20) présentant au moins une entrée (30) et au moins deux sorties (32a, 32b, 32c), chaque sortie (32a, 32b, 32c) étant adaptée pour être reliée sur un desdits organes de pulvérisation (14a, 14b, 14c) et chaque sortie (32a, 32b, 32c) coopérant avec une deuxième soupape (34a, 34b, 34c) de fermeture,
- un conduit de distribution (42) qui relie la sortie (23) du collecteur d'alimentation (18) sur l'entrée (30) du collecteur de distribution (20), pour permettre aux produits de passer du collecteur d'alimentation (18) au collecteur de distribution (20),
- un mécanisme de commande (44) qui comporte au moins un arbre à cames (46) portant une pluralité de cames (48), chaque came (48) agissant sur l'ouverture et la fermeture d'une desdites premières et deuxièmes soupapes, l'arbre à cames (46) étant monté tournant entre plusieurs positions angulaires dans chacune desquelles les premières et deuxièmes soupapes (24a, 24b, 24c, 34a, 34b, 34c) permettent l'alimentation d'un desdits organes de pulvérisation (14a, 14b, 14c) par au moins une desdites sources de produits (12a, 12b, 12c), et
- un moyen d'actionnement (50) de l'arbre à cames (46).

2. Dispositif de distribution (16) selon la revendication 1, **caractérisé en ce que** le mécanisme de commande (44) comporte un premier arbre à cames (46a) qui porte au moins deux cames (48) agissant chacune sur une desdites premières soupapes (24a, 24b, 24c) associées du collecteur d'alimentation (18), et un second arbre à cames (46b) qui porte au moins deux cames (48) agissant chacune sur une desdites deuxièmes soupapes (34a, 34b, 34c) associées du collecteur de distribution (20), le premier arbre à cames (46a) étant lié en rotation sur le second arbre à cames (46b) par un moyen d'accouplement (60) débrayable.

3. Dispositif de distribution (16) selon l'une quelconque des revendications précédentes, **caractérisé en ce que** le conduit de distribution (42) est équipé d'une pompe (52) de circulation conçue pour permettre l'écoulement des produits (12a, 12b, 12c) depuis lesdites sources jusqu'auxdits organes de pulvérisation (14a, 14b, 14c).

4. Dispositif de distribution (16) selon la revendication 3, **caractérisé en ce que** le collecteur d'alimentation (18) et le collecteur de distribution (20) font partie intégrante de la pompe (52) de circulation.

5. Dispositif de distribution (16) selon l'une quelconque des revendications précédentes, **caractérisé en ce qu'**il comporte un conduit de sécurité (54) qui relie le collecteur d'alimentation (18) sur le collecteur de distribution (20) et qui est équipé d'une soupape de sécurité (56).

6. Dispositif de distribution (16) selon l'une quelconque des revendications précédentes, **caractérisé en ce qu'**il comporte au moins un moyen de régulation (58) du débit d'écoulement du produit.

7. Pulvérisateur (10) agricole comprenant une pluralité de sources de produit (12a, 12b, 12c), une pluralité d'organes de pulvérisation (14a, 14b, 14c) et un dispositif de distribution (16) selon l'une quelconque des revendications 1 à 6.

## Patentansprüche

1. Verteilungsvorrichtung (16) für ein landwirtschaftliches Spritzgerät (10), wobei das Spritzgerät (10) einer Vielzahl von Produktquellen (12a, 12b, 12c) und einer Vielzahl von Spritzorganen (14a, 14b, 14c) zugeordnet ist, wobei die Vorrichtung **dadurch gekennzeichnet ist, dass** sie umfasst:
- einen Versorgungsauffang (18), der wenigstens zwei Eingänge (22a, 22b, 22c) und wenigstens einen Ausgang (23) aufweist, wobei jeder Eingang (22a, 22b, 22c) geeignet ist, um auf einer der genannten Produktquellen (12a, 12b, 12c) verbunden zu sein und jeder Eingang (22a, 22b, 22c) mit einem ersten Verschlussventil (24a, 24b, 24c) zusammenwirkt,
- einen Verteilungsauffang (20), der wenigstens einen Eingang (30) und wenigstens zwei Ausgänge (32a, 32b, 32c) aufweist, wobei jeder Ausgang (32a, 32b, 32c) geeignet ist, um auf einem der genannten Spritzorgane (14a, 14b, 14c) verbunden zu sein und jeder Ausgang (32a, 32b, 32c) mit einem zweiten Verschlussventil (34a, 34b, 34c) zusammenwirkt,
- eine Verteilungsleitung (42), die den Ausgang (23) des Versorgungsauffangs (18) auf dem Eingang (30) des Verteilungsauffangs (20) verbindet, um den Produkten das Hindurchtreten vom Versorgungsauffang (18) zum Verteilungsauffang (20) zu ermöglichen,
- einen Steuermechanismus (44), der wenigstens eine Nockenwelle (46) umfasst, die eine Vielzahl von Nocken (48) trägt, wobei jede Nocke (48) auf das Öffnen und das Schließen einer der genannten ersten und zweiten Ventile einwirkt, wobei die Nockenwelle (46) drehend zwischen mehreren Winkelpositionen montiert ist, in allen denen das erste und das zweite Ventil (24a, 24b, 24c, 34a, 34b, 34c) die Versorgung eines der genannten Spritzorgane (14a, 14b, 14c) durch wenigstens eine der genannten Produktquellen (12a, 12b, 12c) ermöglichen und
- ein Betätigungsmittel (50) der Nockenwelle (46).

2. Verteilungsvorrichtung (16) gemäß Anspruch 1, **dadurch gekennzeichnet, dass** der Steuermechanismus (44) eine erste Nockenwelle (46a), die wenigstens zwei Nocken (48) trägt, die jeweils auf wenigstens eines der genannten ersten Ventile (24a, 24b, 24c) einwirken, die dem Versorgungsauffang (18) zugeordnet sind, und eine zweite Nockenwelle (46b), die wenigstens zwei Nocken (48) trägt, die jeweils auf eines der genannten zwei Ventile (34a, 34b, 34c) einwirken, die dem Verteilungsauffang (20) zugeordnet sind, umfasst wobei die erste Nockenwelle (46a) in Rotation auf der zweiten Nockenwelle (46) durch ein ausrückbares Kopplungsmittel (60) verbunden ist.

3. Verteilungsvorrichtung (16) gemäß irgendeinem der voranstehenden Ansprüche, **dadurch gekennzeichnet, dass** die Verteilungsleitung (42) mit einer Umlaufpumpe (52) ausgerüstet ist, die dazu ausgelegt ist, um das Ablaufen der Produkte (12a, 12b, 12c) von den genannten Quellen bis zu den genannten Spritzorganen (14a, 14b, 14c) zu ermöglichen.

4. Verteilungsvorrichtung (16) gemäß Anspruch 3, **dadurch gekennzeichnet, dass** der Versorgungsauffang (18) und der Verteilungsauffang (20) fester Bestandteil der Umlaufpumpe (52) sind.

5. Verteilungsvorrichtung (16) gemäß irgendeinem der voranstehenden Ansprüche, **dadurch gekennzeichnet, dass** sie eine Sicherheitsleitung (54) umfasst, die den Versorgungsauffang (18) auf dem Verteilungsauffang (20) verbindet und mit einem Sicherheitsventil (56) ausgerüstet ist.

6. Verteilungsvorrichtung (16) gemäß irgendeinem der voranstehenden Ansprüche, **dadurch gekennzeichnet, dass** sie wenigstens ein Regulierungsmittel (58) des Ablaufdurchsatzes des Produkts umfasst.

7. Landwirtschaftliches Spritzgerät (10), umfassend eine Vielzahl von Produktquellen (12a, 12b, 12c), eine Vielzahl von Spritzorganen (14a, 14b, 14c) und eine Verteilungsvorrichtung (16) gemäß irgendeinem der Ansprüche 1 bis 6.

## Claims

1. A dispensing device (16) for an agricultural sprayer (10), the sprayer (10) being associated with a plurality of sources of products (12a, 12b, 12c) and with a plurality of spraying members (14a, 14b, 14c), the device being **characterised in that** it comprises:
- a supply manifold (18) having at least two inlets (22a, 22b, 22c) and at least one outlet (23), each inlet (22a, 22b, 22c) being adapted to be connected to one of said sources of products (12a, 12b, 12c) and each inlet (22a, 22b, 22c) cooperating with a first closing valve (24a, 24b, 24c),
- a dispensing manifold (20) having at least one inlet (30) and at least two outlets (32a, 32b, 32c), each outlet (32a, 32b, 32c) being adapted to be connected to one of said spraying members (14a, 14b, 14c) and each outlet (32a, 32b, 32c) cooperating with a second closing valve (34a, 34b, 34c),
- a dispensing duct (42) which connects the outlet (23) of the supply manifold (18) to the inlet (30) of the dispensing manifold (20), to enable the products to go from the supply manifold (18) to the dispensing manifold (20),
- a control mechanism (44) which comprises at least one camshaft (46) carrying a plurality of cams (48), each cam (48) acting on opening and closing of one of said first and second valves, the camshaft (46) being rotatably mounted between several angular positions in each of which the first and second valves (24a, 24b, 24c, 34a, 34b, 34c) enable supply of one of said spraying members (14a, 14b, 14c) by at least one of said sources of products (12a, 12b, 12c), and
- a means (50) for actuating the camshaft (46).

2. The dispensing device (16) according to claim 1, **characterised in that** the control mechanism (44) comprises a first camshaft (46a) which carries at least two cams (48) each acting on one of said first valves (24a, 24b, 24c) associated with the supply manifold (18), and a second camshaft (46b) which carries at least two cams (48) each acting on one of said second valves (34a, 34b, 34c) associated with the dispensing manifold (20), the first camshaft (46a) being rotatably connected to the second camshaft (46b) by a disengageable coupling means (60).

3. The dispensing device (16) according to any of the previous claims, **characterised in that** the dispensing duct (42) is fitted with a circulation pump (52) designed to enable flow of the products (12a, 12b, 12c) from said sources to said spraying members (14a, 14b, 14c).

4. The dispensing device (16) according to claim 3, **characterised in that** the supply manifold (18) and dispensing manifold (20) are an integral part of the circulation pump (52).

5. The dispensing device (16) according to any of the previous claims, **characterised in that** it comprises a safety duct (54) which connects the supply manifold (18) to the dispensing manifold (20) and which is fitted with a safety valve (56).

6. The dispensing device (16) according to any of the previous claims, **characterised in that** it comprises at least one means (58) for regulating flow rate of the product.

7. An agricultural sprayer (10) comprising a plurality of sources of products (12a, 12b, 12c), a plurality of spraying members (14a, 14b, 14c) and a dispensing device (16) according to any of claims 1 to 6.
